# EUROPÄISCHE PATENTSCHRIFT

(11) **EP 3 323 136 B1**
(45) Veröffentlichungstag und Bekanntmachung des Hinweises auf die Patenterteilung: **06.03.2019**
(21) Anmeldenummer: 16759702.0
(22) Anmeldetag: 19.08.2016
(51) Int. Cl.: H01H 33/59

(54) **GLEICHSTROM-SCHALTEINRICHTUNG UND DEREN VERWENDUNG**
DIRECT CURRENT SWITCHING DEVICE AND USE THEREOF
DISPOSITIF DE COMMUTATION DE COURANT CONTINU ET SON UTILISATION

(30) Priorität: 15.09.2015 DE 102015217578
(43) Veröffentlichungstag der Anmeldung: 23.05.2018
(73) Patentinhaber: Siemens Aktiengesellschaft, 80333 München (DE)
(72) Erfinder: HEINZ, Thomas, 14089 Berlin (DE)
(86) Internationale Anmeldenummer: PCT/EP2016/069668
(87) Internationale Veröffentlichungsnummer: WO 2017/045861

(56) Entgegenhaltungen:
- EP-A1- 2 894 653
- WO-A1-2014/154260
- WO-A1-2014/166528
- WO-A1-2015/081615
- DE-A1-102011 083 514
- JP-A- S61 171 020

## Beschreibung

Die Erfindung betrifft eine Gleichstrom-Schalteinrichtung zum Unterbrechen eines entlang eines Mittel- oder Hochspannungs-Strompfades fließenden elektrischen Gleichstroms I, mit einer elektrischen Schaltungsanordnung, die mindestens ein im Mittel- oder Hochspannungs-Strompfad verschaltbares mechanisches Schaltgerät und mindestens eine Schaltungseinheit zum Erzwingen eines Strom-Nulldurchgangs in dem im Mittel- oder Hochspannungs-Strompfad verschalteten mechanischen Schaltgerät aufweist.

Ein mechanisches Schaltgerät der Mittel- und Hochspannungstechnik, wie beispielsweise eine Vakuumschaltröhre, benötigt für die Unterbrechung eines Stroms einen Strom-Nulldurchgang. Dieser Strom-Nulldurchgang ist bei der aktuell vorherrschenden Technologie zur Erzeugung, Übertragung und Verteilung von elektrischer Energie mittels Wechselstrom natürlich immer gegeben.

Die aktuelle Entwicklung im Bereich der Erzeugung, Übertragung und Verteilung von elektrischer Energie zielt auf den vermehrten Einsatz von Systemen mit Gleichstrom, sodass entsprechende Gleichstrom-Schalteinrichtungen notwendig werden. Bei Gleichstrom fehlt jedoch der benötigte Stromnulldurchgang und muss daher beim Einsatz eines mechanischen Schaltgeräts künstlich erzeugt werden.

Eine Gleichstrom-Schalteinrichtung der eingangs erwähnten Art ist aus der Druckschrift US 2013/0070492 A1 bekannt. Diese zeigt eine Gleichstrom-Schalteinrichtung zum Unterbrechen eines entlang eines Hochspannungs-Gleichstrompfades fließenden elektrischen Gleichstroms, mit einer elektrischen Schaltungsanordnung, die einen im Hochspannungs-Gleichstrompfad verschaltbaren mechanischen Unterbrecher sowie eine Schaltungseinheit zum Erzwingen eines Strom-Nulldurchgangs in dem im Mittel- oder Hochspannungs-Strompfad verschalteten mechanischen Schaltgerät aufweist. Diese Schaltungseinheit weist dazu eine LC-Schaltung mit mindestens einer induktiven Komponente und mindestens einer kapazitiven Komponente für die Bildung eines über den Unterbrecher geschlossenen aktiven Schwingkreises sowie ein schaltbares Halbleiterbauelement zur Erzeugung einer den Schwingkreis anregenden Anregungsfrequenz auf. Dieses Halbleiterbauelement ist ein Halbleiterbauelement vom Abschalttyp, das in Serie mit dem mechanischen Unterbrecher im Gleichstrompfad verschaltet ist. Durch das Schalten des Halbleiterbauelements mit einer auf den aktiven Schwingkreis abgestimmten Frequenz wird dem Gleichstrom ein Wechselstrom aufmoduliert, der den Schwingkreis zum Schwingen anregt. Ist die Stromamplitude der Schwingung dieses Schwingkreises größer als der Gleichstrom oder weist sie zumindest die gleiche Größe auf, so entsteht der gewünschte Strom-Nulldurchgang. Die DE 10 2011 079 723 A1 zeigt eine weitere Gleichstrom-Schalteinrichtung mit zwei Unterbrechern und einer alternativ arbeitenden Schaltungseinheit zum Erzwingen eines Strom-Nulldurchgangs.

EP-A1-2894653 offenbart eine Gleichstrom-Schalteinrichtung nach dem Oberbegriff des Anspruchs 1.

Es ist die Aufgabe der Erfindung, eine alternativ aufgebaute Gleichstrom-Schalteinrichtung für Mittel- und Hochspannungsanwendungen anzugeben.

Die Lösung der Aufgabe erfolgt durch die Merkmale der unabhängigen Ansprüche. Vorteilhafte Ausgestaltungen sind in den Unteransprüchen angegeben.

Bei der erfindungsgemäßen Gleichstrom-Schalteinrichtung ist vorgesehen, dass die mindestens eine Schaltungseinheit mehrere kapazitive Komponenten und eine Schalteinrichtung aufweist. Die kapazitiven Komponenten und die Schalteinrichtung sind dabei derart in der Schaltungseinrichtung verschaltet, dass die kapazitiven Komponenten in Abhängigkeit vom Schaltzustand der Schalteinrichtung entweder (a) zu ihrem jeweiligen elektrischen Aufladen über den Mittel- oder Hochspannungs-Strompfad parallel geschaltet sind oder (b) zum Erzeugen eines den Strom-Nulldurchgang erzwingenden Strompulses in Serie geschaltet sind.

Anders als bei den bekannten Gleichstrom-Schalteinrichtungen mit Schwingkreis wird der Stromnulldurchgang durch einen (einzelnen) Strompuls geeigneter Größe erreicht. Dieser wird durch das serielle Verschalten der durch den Strompfad selbst geladen gehaltenen kapazitiven Komponenten der Schaltungseinheit erzeugt.

Gemäß einer bevorzugten Ausgestaltung der Erfindung ist die mindestens eine Schaltungseinheit als eine H-förmigen Brückenschaltung ausgebildet oder weist zumindest eine solche H-förmigen Brückenschaltung auf. Dabei sind die kapazitiven Komponenten und die Schaltvorrichtung in dieser H-förmigen Brückenschaltung angeordnet.

Gemäß einer weiteren bevorzugten Ausgestaltung der Erfindung ist vorgesehen, dass die Schaltungseinheit weiterhin mehrere induktive Komponenten und/oder mehrere Resistanz-Komponenten aufweist.

Dabei ist insbesondere vorgesehen, dass die H-förmige Brückenschaltung oder zumindest eine der H-förmigen Brückenschaltungen
- einen vom Mittel- oder Hochspannungs-Strompfad abgehenden ersten Stromabzweig aufweist, in dem mindestens eine der kapazitiven Komponenten, mindestens eine der induktiven Komponenten und mindestens eine der Resistanz-Komponenten seriell angeordnet sind,
- einen vom Mittel- oder Hochspannungs-Strompfad abgehenden zweiten Stromabzweig aufweist, in dem mindestens eine der kapazitiven Komponenten, mindestens eine der induktiven Komponenten und mindestens eine der Resistanz-Komponenten seriell angeordnet sind und
- einen den ersten Stromabzweig mit dem zweiten Stromabzweig verbindenden Querstrompfad aufweist, in dem die Schaltvorrichtung angeordnet ist.

Insbesondere ist vorgesehen, dass beide Stromabzweige jeweils den Mittel- oder Hochspannungs-Strompfad mit einem gemeinsamen Referenz-Potential verbinden. Dieses Referenz-Potential ist bevorzugt Erdpotential.

Gemäß noch einer weiteren bevorzugten Ausführungsform der Erfindung ist vorgesehen, dass die kapazitive Komponente des ersten Stromabzweigs in dem ersten Stromabzweig zwischen dem Mittel- oder Hochspannungs-Strompfad und dem Querstrompfad angeordnet ist und die kapazitive Komponente des zweiten Stromabzweigs auf der dem Mittel- oder Hochspannungs-Strompfad - bezüglich des Querstrompfades - abgewandten Seite des zweiten Stromabzweigs angeordnet ist.

In einer weiteren vorteilhaften Ausgestaltung ist vorgesehen, dass mindestens eines der mechanischen Schaltgeräte als Vakuumschaltröhre ausgebildet ist. Mit besonderem Vorteil sind alle mechanischen Schaltgeräte als Vakuumschaltröhren ausgebildet.

Gemäß einer weiteren bevorzugten Ausführungsform der Erfindung weist die Schaltungsanordnung (jeweils) einen parallel zu dem (jeweiligen) mechanischen Schaltgerät geschalteten Überspannungsableiter auf.

Schließlich ist bevorzugt vorgesehen, dass die Gleichstrom-Schalteinrichtung weiterhin eine Steuer- und/oder Regeleinrichtung zur koordinierten Ansteuerung des mindestens einen mechanischen Schaltgerätes und der mindestens einen Schaltvorrichtung aufweist.

Die Erfindung betrifft weiterhin die Verwendung der vorstehend genannten Gleichstrom-Schalteinrichtung zum Unterbrechen eines entlang eines Mittel- oder Hochspannungs-Strompfades fließenden elektrischen Gleichstroms I.

Im Folgenden werden Ausführungsbeispiele der Erfindung schematisch in Zeichnungen gezeigt und nachfolgend näher beschrieben. Dabei zeigen:
- Fig. 1: eine Gleichstrom-Schalteinrichtung gemäß einer ersten bevorzugten Ausführungsform der Erfindung,
- Fig. 2: den zeitlichen Verlauf diverser Ströme in der Gleichstrom-Schalteinrichtung,
- Fig. 3: eine Gleichstrom-Schalteinrichtung gemäß einer zweiten bevorzugten Ausführungsform der Erfindung, und

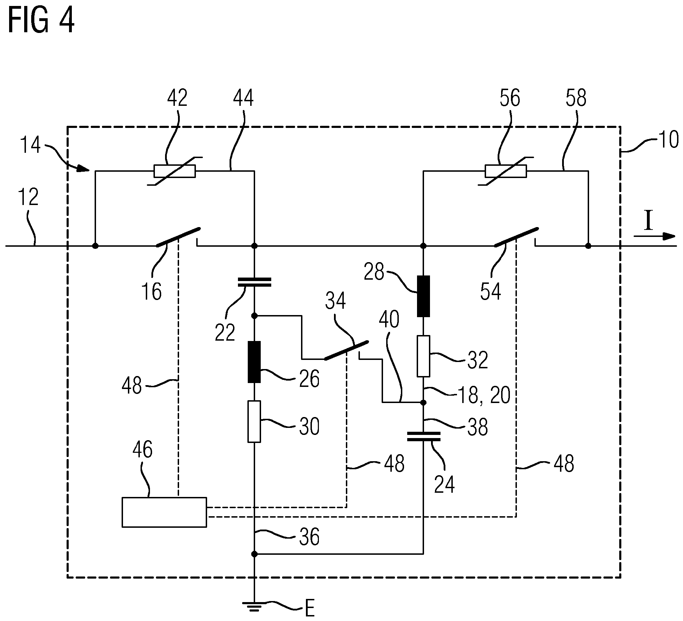

- Fig. 4: eine Gleichstrom-Schalteinrichtung gemäß einer dritten bevorzugten Ausführungsform der Erfindung.

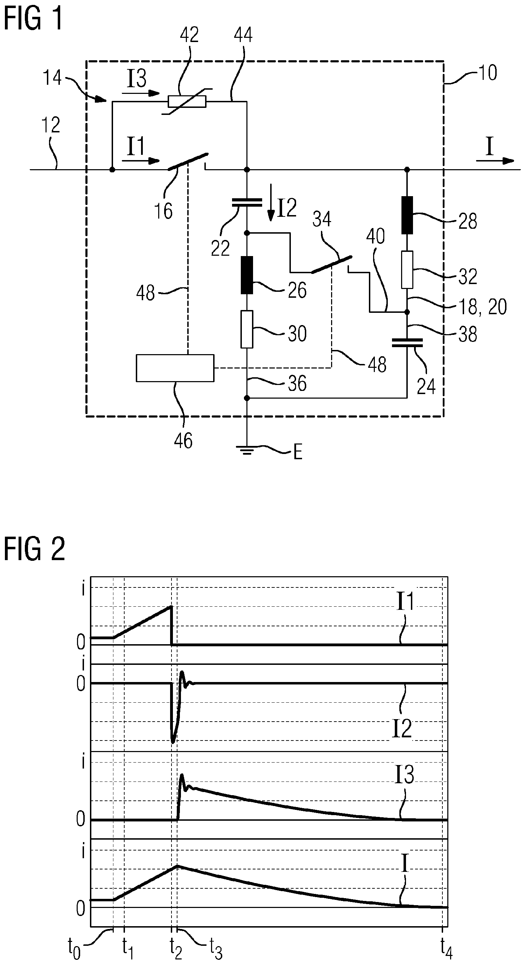

Die Fig. 1 zeigt eine Gleichstrom-Schalteinrichtung 10 zum Unterbrechen eines entlang eines Mittel- oder Hochspannungs-Strompfades 12 fließenden elektrischen Gleichstroms I und einen entsprechenden Strompfad 12. Die Gleichstrom-Schalteinrichtung 10 weist eine elektrische Schaltungsanordnung 14 auf, die ihrerseits ein im Mittel- oder Hochspannungs-Strompfad 12 verschaltbares/verschaltetes mechanisches Schaltgerät 16 sowie eine Schaltungseinheit 18 zum Erzwingen eines Strom-Nulldurchgangs in diesem im Mittel- oder Hochspannungs-Strompfad verschalteten mechanischen Schaltgerät 16 aufweist. Diese Schaltungseinheit 18 ist dabei in Stromrichtung des Gleichstroms I hinter dem mechanischen Schaltgerät 16 angeordnet (symbolisiert durch den Pfeil bei I).

Die Schaltungseinheit 18 der Schaltungsanordnung 14 ist als eine H-förmige Brückenschaltung 20 mit zwei kapazitiven Komponenten 22, 24, zwei induktiven Komponenten 26, 28, zwei Resistanz-Komponenten 30, 32 und einer als Schaltvorrichtung 34 ausgebildeten weiteren Komponente ausgestaltet. Die kapazitiven Komponenten 22, 24 sind hier als Kondensatoren, die induktiven Komponenten 26, 28 sind hier als Spulen und die Resistanz-Komponenten 30, 32 sind hier als ohmsche Widerstände im Sinne von elektrischen Bauelementen dargestellt. Die einzelnen Komponenten 22, 24, 26, 28, 30, 32, 34 müssen jedoch nicht zwangsläufig als jeweiliges Bauelement vorliegen, vielmehr kann es auch möglich sein, dass ein Bauelement mehrere unterschiedliche Komponenten bildet oder einzelne Komponenten von mehreren Bauelementen gebildet werden. Beispielsweise bildet in der Regel eine reale Spule eine induktive Komponente 26, 28 und eine Resistanz-(Teil-) Komponente 30, 32 aus.

Prinzipiell kann die Schaltvorrichtung 34 als mechanische Schaltvorrichtung ausgestaltet sein, es sind jedoch auch andere Ausgestaltungen möglich, beispielsweise als Halbleiter-Schaltvorrichtung, als getriggerte Funkenstrecke oder als vergleichbarer schneller Zuschalter.

Die erwähnten Komponenten 22, 24, 26, 28, 30, 32, 34 sind derart in der als H-förmige Brückenschaltung 20 ausgebildeten Schaltungseinheit 18 verschaltet, dass die kapazitiven Komponenten 22, 24 in Abhängigkeit vom Schaltzustand der Schaltvorrichtung (a) in einem ersten Schaltzustand zu ihrem jeweiligen elektrischen Aufladen über den Mittel- oder Hochspannungs-Strompfad 12 parallel geschaltet sind und (b) in einem zweiten Schaltzustand zum Erzeugen eines den Strom-Nulldurchgang im Schaltgerät 16 erzwingenden Strompulses in Serie geschaltet sind. Im Beispiel entspricht der erste Schaltzustand einem geöffneten Schalterzustand und der zweite Schaltzustand einem geschlossenen Schalterzustand der Schaltvorrichtung 34.

Im gezeigten Beispiel weist die H-förmige Brückenschaltung 20 (i) einen vom Mittel- oder Hochspannungs-Strompfad 12 abgehenden ersten Stromabzweig 36 auf, in dem eine der kapazitiven Komponenten 22, eine der induktiven Komponenten 26 und eine der Resistanz-Komponenten 30 (als erste RLC-Verbindung) seriell angeordnet sind, (ii) einen vom Mittel- oder Hochspannungs-Strompfad 12 abgehenden zweiten Stromabzweig 38 auf, in dem die andere der kapazitiven Komponenten 24, die andere der induktiven Komponenten 28 und die andere der Resistanz-Komponenten 32 (als zweite RLC-Verbindung) seriell angeordnet sind und (iii) einen den ersten Stromabzweig 36 mit dem zweiten Stromabzweig 38 verbindenden Querstrompfad 40 auf, in dem die Schaltvorrichtung 32 angeordnet ist. Die beiden Stromabzweige 36, 38 verbinden dabei jeweils den Mittel- oder Hochspannungs-Strompfad 12 mit einem gemeinsamen Referenz-Potential, das hier im Beispiel das Erdpotential E ist.

Dabei ist die kapazitive Komponente 22 des ersten Stromabzweigs 36 in diesem ersten Stromabzweig 36 zwischen dem Mittel- oder Hochspannungs-Strompfad 12 und dem Querstrompfad 40 angeordnet und die induktive Komponente 26 wie auch die Resistanz-Komponente 30 des ersten Stromabzweigs 36 zwischen dem Querstrompfad 40 und dem Referenzpotential, also dem Erdpotential E, angeordnet. Weiterhin sind die induktive Komponente 28 wie auch die Resistanz-Komponente 32 des zweiten Stromabzweigs 38 in diesem zweiten Stromabzweig 38 zwischen dem Mittel- oder Hochspannungs-Strompfad 12 und dem Querstrompfad 40 angeordnet und die kapazitive Komponente 24 des zweiten Stromabzweigs 38 zwischen dem Querstrompfad 40 und dem Referenzpotential, also dem Erdpotential E, angeordnet.

Die beiden parallel verlaufenden RLC-Verbindungen sind also entgegengesetzt verschaltet. Die beiden RLC-Verbindungen können prinzipiell jedoch auch vertauscht werden.

Die Schaltungsanordnung 14 weist weiterhin einen Überspannungsableiter 42 auf der in einem Parallelstrompfad 44 parallel zu dem mechanischen Schaltgerät 16 geschaltet ist.

Die Gleichstrom-Schalteinrichtung 10 weist schließlich noch eine Steuer- und/oder Regeleinrichtung 46 zur koordinierten Ansteuerung des mindestens einen mechanischen Schaltgerätes 16 und der Schaltvorrichtung 34 auf. Die Ansteuerung erfolgt über Signalpfade 48.

Es ergibt sich folgende Funktion:
Im normalen Betrieb werden die beiden kapazitiven Komponenten (Kondensatoren) 22, 24 über das Gleichstromnetz, zu dem auch der Mittel- oder Hochspannungs-Strompfad 12 gehört, aufgeladen und der Gleichstrom I fließt über das mechanische Schaltgerät 16. Kommt es zu einer Schalthandlung, so wird das mechanische Schaltgerät 16 im Strompfad 12 geöffnet und die Schaltvorrichtung 34 wird mit etwas Verzögerung geschlossen.

Durch die geschlossene Schaltvorrichtung 34 werden die beiden auf Systemspannung aufgeladenen kapazitiven Komponenten 22, 24 in Reihe/Serie geschaltet. Am mechanischen Schaltgerät 16 im Strompfad 12 kommt es kurzzeitig zu einer Spannungsüberhöhung, sodass der Stromfluss im mechanischen Schaltgerät 16 kurzeitig umgekehrt und künstlich zu Null gebracht wird. Der Strom im mechanischen Schaltgerät 16 wird unterbrochen und der parallel angeschlossene Überspannungsableiter (z.B. MO-Varistor) 42 schützt die Anordnung 10, 14 vor entstehenden Überspannungen.

Der zeitliche Verlauf der entstehenden Ströme I, I1, I2, I3 ist dabei im Graph der Fig. 2 gezeigt, wobei ein Zeitfenster von einigen Millisekunden dargestellt ist. Die entsprechenden Daten sind durch eine Simulation generiert. Dabei ist der Gleichstrom I der in Stromrichtung hinter der Gleichstrom-Schalteinrichtung 10 fließende Gleichstrom. Der Strom I1 ist der durch das mechanische Schaltgerät 16 fließende Gleichstrom, der Strom I2 ist der durch die Serienschaltung der kapazitiven Komponenten 22, 24 fließende Strom und der Strom I3 ist der durch den Überspannungsableiter 42 fließende Strom.

Zum Zeitpunkt t0 ist das Schaltgerät 16 (noch) geschlossen und es fließt der Gleichstrom I durch den Strompfad 12. Die beiden kapazitiven Komponenten 22, 24 sind auf Systemspannung aufgeladenen.

Zum Zeitpunkt t1 wird nun das Schaltgerät 16 geöffnet und es entsteht ein Lichtbogen. Mit etwas Verzögerung wird nun zum Zeitpunkt t3 die Schaltvorrichtung 34 geschlossen. Durch die Serienschaltung der beiden auf Systemspannung aufgeladenen kapazitiven Komponenten 22, 24 ergibt sich der durch die Serienschaltung der kapazitiven Komponenten 22, 24 fließende Strom I2. Am mechanischen Schaltgerät 16 im Strompfad 12 kommt es dadurch zu einer Spannungsüberhöhung, sodass der Stromfluss im mechanischen Schaltgerät 16 kurzzeitig umgekehrt und künstlich zu Null gebracht wird. Der Strom I1 im mechanischen Schaltgerät 16 wird unterbrochen und der parallel angeschlossene Überspannungsableiter 42 schützt die Anordnung 10, 12 vor entstehenden Überspannungen.

Dazu fließt nun ab dem Zeitpunkt t3 der entsprechende Strom I3 durch den Parallelstrompfad 44 und den darin verschalteten Überspannungsableiter 42 bis zu einem Zeitpunkt t4, bei dem der Strom I3 und damit auch der Gleichstrom I vollständig abgeklungen ist. Das Unterbrechen des Gleichstroms I entlang des Strompfades 12 ist damit vollständig abgeschlossen.

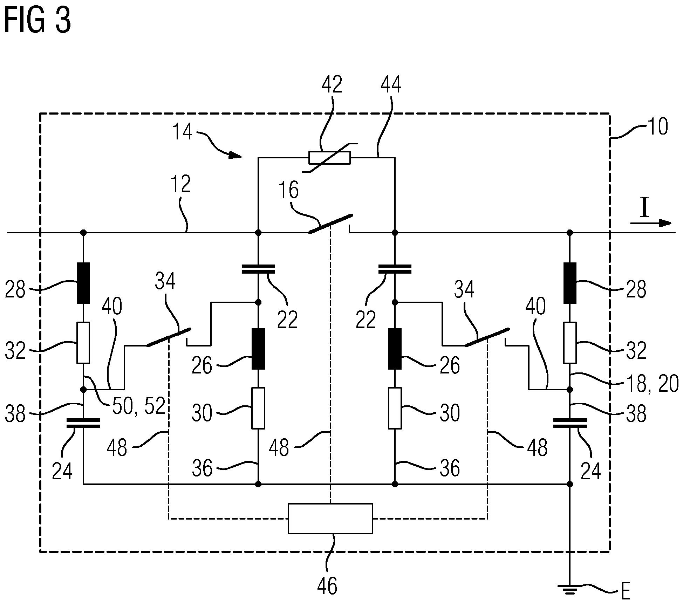

Die in Fig. 1 gezeigte Gleichstrom-Schalteinrichtung 10 ist in dieser in Fig. 1 gezeigten Konfiguration nur für den unipolaren Betrieb geeignet. Sollen auch Gleichströme I mit entgegengesetzter Stromrichtung unterbrochen werden können, so muss die Schaltungsanordnung 14 erweitert werden. Eine Möglichkeit besteht darin, dass die Schaltungseinheit 18, also die H-Brückenschaltung 20 aus den beiden RLC-Verbindungen und der Schaltvorrichtung im Querstrompfad 40 ein zweites Mal auf der bezüglich des mechanischen Schaltgeräts 16 anderen Seite des Strompfades 12 angeordnet wird. Die sich ergebenden Schaltungseinheiten 18, 50 bzw. H-Brückenschaltungen 20, 52 können gleichsinnig oder gespiegelt kontaktiert werden. In Fig. 3 ist eine Version einer solchen bipolaren Gleichstrom-Schalteinrichtung 10 zur Verdeutlichung dargestellt.

Alternativ kann aber auch im Strompfad 12 hinter der Schaltungseinheit 18, also der H-Brückenschaltung 20 aus Fig. 1, ein weiteres mechanisches Schaltgerät 54 eingesetzt werden, wobei die Schaltungsanordnung 14 auch hier einen Überspannungsableiter 56 aufweist, der in einem Parallelstrompfad 58 parallel zu dem weiteren mechanischen Schaltgerät 54 geschaltet ist.

Bei dieser Art der Verschaltung ergibt sich der Vorteil, dass beim Einschalten z.B. erst das eine mechanische Schaltgerät 16 geschlossen wird, wobei das weitere mechanische Schaltgerät 54 noch geöffnet bleibt. Dadurch werden erst die kapazitiven Komponenten (Kondensatoren) 22, 24; aufgeladen, bevor das angeschlossene Gleichstromsystem zugeschaltet wird. Sollte hier z.B. ein Fehler vorliegen, so kann unmittelbar nach dem Zuschalten des weiteren mechanischen Schaltgeräts 54 wieder abgeschaltet werden.

### Bezugszeichenliste

- 10: Gleichstrom-Schalteinrichtung
- 12: Strompfad
- 14: Schaltungsanordnung
- 16: Schaltgerät, mechanisch
- 18: Schaltungseinheit
- 20: Brückenschaltung, H-förmig
- 22: Komponente, kapazitiv
- 24: Komponente, kapazitiv
- 26: Komponente, induktiv
- 28: Komponente, induktiv
- 30: Resistanz-Komponente
- 32: Resistanz-Komponente
- 34: Schaltvorrichtung
- 36: Stromabzweig, erster
- 38: Stromabzweig, zweiter
- 40: Querstrompfad
- 42: Überspannungsableiter
- 44: Parallelstrompfad
- 46: Steuer- und/oder Regeleinrichtung
- 48: Signalpfad
- 50: Schaltungseinheit, weitere
- 52: Brückenschaltung, H-förmig
- 54: Schaltgerät, mechanisch
- 56: Überspannungsableiter, weiterer
- 58: Parallelstrompfad, weiterer
- I: Gleichstrom
- I1: Strom über das Schaltgerät
- I2: Strom über die kapazitiven Komponenten
- I3: Strom über den Überspannungsableiter
- E: Erdung

## Patentansprüche

1. Gleichstrom-Schalteinrichtung (10) zum Unterbrechen eines entlang eines Mittel- oder Hochspannungs-Strompfades (12) fließenden elektrischen Gleichstroms (I), mit einer elektrischen Schaltungsanordnung (14), die mindestens ein im Mittel- oder Hochspannungs-Strompfad (12) verschaltbares mechanisches Schaltgerät (16, 54) und mindestens eine Schaltungseinheit (18, 50) zum Erzwingen eines Strom-Nulldurchgangs in dem im Mittel- oder Hochspannungs-Strompfad (12) verschalteten mechanischen Schaltgerät (16, 54) aufweist, wobei die mindestens eine Schaltungseinheit (18, 50) mehrere kapazitive Komponenten (20, 22) und eine Schaltvorrichtung (34) aufweist, die derart in der Schaltungseinheit (18) verschaltet sind, **dadurch gekennzeichnet, dass** die kapazitiven Komponenten (22, 24)
- in einem ersten Schaltzustand der Schaltvorrichtung (34) zu ihrem jeweiligen elektrischen Aufladen über den Mittel- oder Hochspannungs-Strompfad (12) parallel geschaltet sind und
- in einem zweiten Schaltzustand der Schaltvorrichtung (34) zum Erzeugen eines den Strom-Nulldurchgang erzwingenden Strompulses in Serie geschaltet sind.

2. Gleichstrom-Schalteinrichtung nach Anspruch 1,
**dadurch gekennzeichnet, dass**
die mindestens eine Schaltungseinheit (18, 50) als eine H-förmige Brückenschaltung (20, 52)ausgebildet ist oder zumindest eine solche H-förmige Brückenschaltung (20) aufweist, wobei die kapazitiven Komponenten (22, 24) und die Schaltvorrichtung (34) in dieser H-förmigen Brückenschaltung (20) angeordnet sind.

3. Gleichstrom-Schalteinrichtung nach Anspruch 1 oder 2, **dadurch gekennzeichnet, dass**
die Schaltungseinheit (18) weiterhin mehrere induktive Komponenten (26, 28) und/oder mehrere Resistanz-Komponenten (30, 32) aufweist.

4. Gleichstrom-Schalteinrichtung nach Anspruch 3,
**dadurch gekennzeichnet, dass**
die H-förmige Brückenschaltung (20) oder zumindest eine der H-förmigen Brückenschaltungen (20, 52)
- einen vom Mittel- oder Hochspannungs-Strompfad (12) abgehenden ersten Stromabzweig (36) aufweist, in dem mindestens eine der kapazitiven Komponenten (22), mindestens eine der induktiven Komponenten (26) und mindestens eine der Resistanz-Komponenten (30) seriell angeordnet sind,
- einen vom Mittel- oder Hochspannungs-Strompfad abgehenden zweiten Stromabzweig (38) aufweist, in dem mindestens eine der kapazitiven Komponenten (24), mindestens eine der induktiven Komponenten (28) und mindestens eine der Resistanz-Komponenten (32) seriell angeordnet sind und
- einen den ersten Stromabzweig (36) mit dem zweiten Stromabzweig (38) verbindenden Querstrompfad (40) aufweist, in dem die Schaltvorrichtung (34) angeordnet ist.

5. Gleichstrom-Leistungsschalter nach Anspruch 4,
**dadurch gekennzeichnet, dass**
beide Stromabzweige (36, 38) jeweils den Mittel- oder Hochspannungs-Strompfad (12) mit einem gemeinsamen Referenz-Potential (E) verbinden.

6. Gleichstrom-Schalteinrichtung nach Anspruch 4 oder 5, **dadurch gekennzeichnet, dass**
die kapazitive Komponente (22) des ersten Stromabzweigs (36) in dem ersten Stromabzweig (36) zwischen dem Mittel- oder Hochspannungs-Strompfad (12) und dem Querstrompfad (40) angeordnet ist und dass die kapazitive Komponente (24) des zweiten Stromabzweigs (38) auf der dem Mittel- oder Hochspannungs-Strompfad (12) -bezüglich des Querstrompfades (40)- abgewandten Seite des zweiten Stromabzweigs (38) angeordnet ist.

7. Gleichstrom-Schalteinrichtung nach einem der Ansprüche 1 bis 6,
**dadurch gekennzeichnet, dass**
das Schaltgerät (16) oder mindestens eines der mechanischen Schaltgeräte (16, 54) als Vakuumschaltröhre ausgebildet ist.

8. Gleichstrom-Schalteinrichtung nach einem der Ansprüche 1 bis 7,
**dadurch gekennzeichnet, dass**
die Schaltungsanordnung (14) einen parallel zu dem mindestens einen mechanischen Schaltgerät (16, 54) geschalteten Überspannungsableiter (42, 56) aufweist.

9. Gleichstrom-Schalteinrichtung nach einem der Ansprüche 1 bis 8,
**gekennzeichnet durch**
eine Steuer- und/oder Regeleinrichtung (46) zur koordinierten Ansteuerung des mindestens einen mechanischen Schaltgerätes (16, 54) und der mindestens einen Schaltvorrichtung (34).

10. Verwendung der Gleichstrom-Schalteinrichtung (10) nach einem der Ansprüche 1 bis 9 zum Unterbrechen eines entlang eines Mittel- oder Hochspannungs-Strompfades (12) fließenden elektrischen Gleichstroms (I).

## Claims

1. Direct-current switching device (10) for interrupting a direct electric current (I) flowing along a medium- or high-voltage current path (12), comprising an electric circuit arrangement (14), which comprises at least one mechanical switching device (16, 54) that can be connected in the medium- or high-voltage current path (12), and at least one switching device (18, 50), in order to force a current zero crossing in the mechanical switching device (16, 54) connected in the medium- or high-voltage current path (12),
wherein
the at least one switching device (18, 50) comprises a plurality of capacitive components (20, 22) and a switching device (34), which are connected in the switching device (18) in such a way, **characterized in that** the capacitive components (22, 24)
- in a first switching state of the switching device (34) are connected in parallel for a respective electrical charging process via the medium- or high-voltage current path (12) and
- in a second switching state of the switching device (34) are connected in series to generate a current pulse which forces the current zero crossing.

2. Direct-current switching device according to Claim 1, **characterized in that**
the at least one switching device (18, 50) is designed as an H-shaped bridge circuit (20, 52) or at least comprises such an H-shaped bridge circuit (20), wherein the capacitive components (22, 24), and the switching device (34) are arranged in this H-shaped bridge circuit (20).

3. Direct-current switching device according to Claim 1 or 2, **characterized in that**
the switching device (18) also comprises a plurality of inductive components (26, 28) and/or a plurality of resistance components (30, 32).

4. Direct-current switching device according to Claim 3, **characterized in that**
the H-shaped bridge circuit (20), or at least one of the H-shaped bridge circuits (20, 52)
- comprises a first current branch (36) diverging from the medium- or high-voltage current path (12), in which at least one of the capacitive components (22), at least one of the inductive components (26) and at least one of the resistance components (30) are arranged in series,
- comprises a second current branch (38) diverging from the medium- or high-voltage current path, in which at least one of the capacitive components (24), at least one of the inductive components (28) and at least one of the resistance components (32) are arranged in series and
- a transverse current path (40) connecting the first current branch (36) to the second current branch (38), in which the switching device (34) is arranged.

5. Direct-current power switch according to Claim 4, **characterized in that**
both current branches (36, 38) connect the medium- or high-voltage current path (12) to a common reference potential (E).

6. Direct-current switching device according to Claim 4 or 5, **characterized in that**
the capacitive component (22) of the first current branch (36) is arranged in the first current branch (36) between the medium- or high-voltage current path (12) and the transverse current path (40) and that the capacitive component (24) of the second current branch (38) is arranged on the side of the second current branch (38) facing away from the medium- or high-voltage current path (12) with respect to the transverse current path (40).

7. Direct-current switching device according to any one of Claims 1 to 6,
**characterized in that**
the switching device (16) or at least one of the mechanical switching devices (16, 54) is designed as a vacuum interrupter.

8. Direct-current switching device according to any one of Claims 1 to 7,
**characterized in that**
the circuit arrangement (14) has an overvoltage arrester (42, 56) connected in parallel with the at least one mechanical switching device (16, 54).

9. Direct-current switching device according to any one of Claims 1 to 8,
**characterized by**
a control and/or regulating device (46) for the coordinated activation of the at least one mechanical switching device (16, 54) and the at least one switching device (34).

10. Use of the direct current switching device (10) according to any one of Claims 1 to 9 for interrupting a direct electric current (I) flowing along a medium- or high-voltage current path (12).

## Revendications

1. Dispositif (10) d'interruption de courant continu, pour interrompre un courant (I) électrique continu, passant suivant un trajet (12) de courant de moyenne tension ou de haute tension, comprenant un montage (14) électrique, qui a au moins un appareil (16, 54) mécanique d'interruption, pouvant être monté dans le trajet (12) de courant de moyenne tension et au moins une unité (18, 50) de circuit, pour obliger un passage par zéro du courant dans l'appareil (16, 54) mécanique d'interruption monté dans le trajet (12) de courant de moyenne tension et de haute tension,
dans lequel la au moins une unité (18, 50) de circuit a plusieurs composants (20, 22) capacitifs et un système (34) d'interruption, qui sont montés dans l'unité (18) de circuit, de manière caractéristique en ce que les composants (22, 24) capacitifs
- soient montés dans un premier état du système (34) d'interruption en parallèle, pour leur charge électrique respective, par l'intermédiaire du trajet (12) de courant de moyenne tension ou de haute tension et
- dans un deuxième état du système (34) d'interruption, soient montée en série, pour la production d'une impulsion de courant, obligeant un passage par zéro du courant.

2. Dispositif d'interruption de courant continu suivant la revendication 1,
**caractérisé en ce que**
la au moins une unité (18, 50) de circuit est constituée sous la forme d'un circuit (20, 52) en pont en forme de H ou a au moins un circuit (20) en pont en forme de H de ce genre, les composants (22, 24) capacitifs et le système (34) d'interruption étant montés dans ce circuit (20) en pont en forme de H.

3. Dispositif d'interruption de courant continu suivant la revendication 1 ou 2,
**caractérisé en ce que**
l'unité (18) de circuit a, en outre, plusieurs composants (26, 28) inductifs et/ou plusieurs composants (30, 32) résistifs.

4. Dispositif d'interruption de courant continu suivant la revendication 3,
**caractérisé en ce que**
le circuit (20) en pont en forme de H ou au moins l'un des circuits (20, 52) en pont en forme de H
- a une première dérivation (36) de courant, partant du trajet (12) de courant de moyenne tension ou de haute tension, dans laquelle sont montés en série au moins l'un des composants (22) capacitifs, au moins l'un des composants (26) inductifs et au moins l'un des composants (30) résistifs,
- a une deuxième dérivation (38) de courant, partant du trajet de courant de moyenne tension ou de haute tension, dans laquelle sont montés en série au moins l'un des composants (24) capacitifs, au moins l'un des composants (28) inductifs et au moins l'un des composants (32) résistifs et
- a un trajet (40) de courant transversal, qui relie la première dérivation (36) de courant à la deuxième dérivation (38) de courant et dans lequel est monté le système (34) d'interruption.

5. Dispositif d'interruption de courant continu suivant la revendication 4,
**caractérisé en ce que**
les deux dérivations (36, 38) de courant relient chacune le trajet (32) de courant de moyenne tension ou de haute tension à un potentiel (E) de référence commun.

6. Dispositif d'interruption de courant continu suivant la revendication 4 ou 5,
**caractérisé en ce que**
le composant (22) capacitif de la première dérivation (36) de courant est monté dans la première dérivation (36) de courant entre le trajet (12) de courant de moyenne tension ou de haute tension et le trajet (40) de courant transversal et **en ce que** le composant (24) capacitif de la deuxième dérivation (38) de courant est monté du côté, loin du trajet (12) de courant de moyenne tension ou de haute tension - par rapport au trajet (40) de courant transversal -, de la deuxième dérivation (38) de courant.

7. Dispositif d'interruption de courant continu suivant l'une des revendications 1 à 6,
**caractérisé en ce que**
l'appareil (16) d'interruption ou au moins l'un des appareils (16, 54) mécaniques d'interruption est constitué sous la forme d'un tube d'interruption à vide.

8. Dispositif d'interruption de courant continu suivant l'une des revendications 1 à 7,
**caractérisé en ce que**
le montage (14) a un parafoudre (42, 56) monté en parallèle au au moins un appareil (16, 54) mécanique d'interruption.

9. Dispositif d'interruption de courant continu suivant l'une des revendications 1 à 8,
**caractérisé par**
un dispositif (46) de commande et/ou de régulation pour la commande coordonnée du au moins un appareil (16, 54) mécanique d'interruption et du au moins un système (34) d'interruption.

10. Utilisation du dispositif (10) d'interruption de courant continu suivant l'une des revendications 1 à 9, pour interrompre un courant (I) électrique continu, passant suivant un trajet (12) de courant de moyenne tension ou de haute tension.
